# EUROPEAN PATENT APPLICATION

(11) **EP 2 083 196 A1**
(43) Date of publication of application: **29.07.2009**
(21) Application number: 08001395.6
(22) Date of filing: 25.01.2008
(51) Int. Cl.: F16H 57/04

(54) **Lubrication system in a transmission means, anduse of such a lubrication system, and a method tofor lubricate lubrication**

(71) Applicant: GM Global Technology Operations, Inc., Detroit MI 48265-3 (US)
(72) Inventor: Bjoerck, Per-Gunnar, 46153 Trollhättan (SE); Freiholtz, Mattias, 46237 Vänersborg (SE)
(74) Representative: Strauss, Peter

(57) **Abstract**

A lubrication system in a transmission, said lubrication system comprising a first toothed gear (4) wherein at least one of the gaps of said first tooted gear (4) is submerged in lubricant, and a second toothed gear (5) that meshes in with said first toothed gear (4) in a mesh point (6), wherein said lubrication system further comprises covering means (7,8) that covers at least one of the gaps of said first toothed gear (4) adjacent said mesh point (6) and wherein said covering means (7,8) is at least partly submerged in said lubricant so that said lubricant is conveyed to said mesh point (6) by said covered gaps, and creating a local overpressure at said mesh point (6) by meshing in a lubricant filled gap of said first tooted gear (4) with said second tooted gear (5).

## Description

### Field of the Invention

The present invention relates to a lubrication system in a transmission means and furthermore to use of said lubrication system in a vehicle. Furthermore the present invention discloses a method to lubricate with such a lubrication system in a transmission means.

### Technical Background

An all wheel drive system of a vehicle usually comprises a power take-off unit, a propshaft driveshaftand a rear drive module. The power take-off unit is mounted on the gearbox, and its purpose is to transfer torque to the rear end of the driveline. The driving torque forceto the rear wheels is hence transmitted from the engine to the power take-off unit and further to the driveshaftpropshaft and the rear drive module, which distributes the driving torque forceto the rear wheels of the vehicle. Lubrication of the power take-off unit is essential, primarily for durability but also for heat transport evacuation.

The conventional way to achieve sufficient lubrication within a power take-off unit is to let the lubricant splash around inside the power take-off unit driven by its internal rotating gear sets. However, packing restrictions, for instance the location of the drive shaftpropshaft and the exhaust system, constrain the dimensions of the power take-off unit and might imply a relatively large vertical distance between the input shaft and the output shaft of the power take-off unit.

Existing power take-off units with significant height difference between the input and the output shafts are lubricated by the conventional method described above. This way of lubrication of higher placed bearings near the output shaft is adequate when the rotational speed is significant. But, when driving, for example, uphill with a heavy vehicle for instance a heavy trailer at low speed the rotational speed of the gear set could become too low to achieve sufficient lubrication of the higher placed bearings as they are not directly exposed to the lubricant.

US6413183 shows a transmission, which is lubricated by having lubricant splashing around inside the transmission. This concept gives sufficient lubrication to gears and bearings during ordinary operation speeds. However, during low speed-high torque conditions, lack of lubricant might appear with reduced bearing lifetime as a result. This may be solved as described in US US4841803, which discloses an oil pump assembly for pumping oil inside a transmission. US5643127 shows another transmission arrangement with a mechanical pump that sucks up oil from an oil sump and feeds the oil to other parts of the transmission. However, these oil pump arrangements are space demanding, cost intensive and considerable modifications of the transmissions are necessary.

Hence there is still a need for a more compact system that lubricates the power take-off unit sufficiently, in particular at low velocities.

### Summary of the invention

In view of the above, an objective of the present invention is to solve or at least reduce the problems discussed above. In particular, an objective is to improve lubrication of the bearings and gears inside a transmission during low speed-high torque conditions.

*KRAV1* According to a first aspect, the invention relates to a lubrication system in a transmission means, wherein the lubrication system comprising a first toothed gear wherein at least one of the gaps of the first tooted gear is submerged in lubricant, and a second toothed gear that mesh in with the first toothed gear in a mesh point, wherein the lubrication system further comprises covering means that covers at least one of the gaps of the first toothed gear adjacent the mesh point and wherein the covering means is at least partly submerged in the lubricant so that the lubricant is conveyed to the mesh point by the covered gaps.

An advantage of the present invention is that lubrication of the transmission means will be improved. The covering means provided at the gaps of the first toothed gear will facilitate conveying of lubricant from the lubricant reservoir in the lower part of the transmission means to other parts of the transmission means, for example at a higher level. Since the amount of conveyed lubricant inside the transmission means will be considerably higher than without a covering means, the splash when the two toothed gears mesh in with each other will improve lubrication and more parts of the transmission means may be lubricated. Lubrication of the transmission means is achieved with improved lifetime as a result. Since the present invention describes a lubrication system that may use already existing parts of an ordinary transmission means, no significant oncost adds for the product. The work pieces of the present invention that are new are easily adapted to and included in an ordinary transmission means.

KRA V2 Preferably, the lubrication system further comprises at least one lubricant guidance arrangement provided adjacent the mesh point.

The lubricant guidance arrangement may be used to guide the lubricant to a predetermined area where it is needed, for instance at the upper bearings in the transmission means. The lubricant is conveyed from the lubricant reservoir in the lower part of the transmission means by the covered gaps of the first toothed gear. When the gear teeth of the first and second toothed gears mesh in, no space will be left for the lubricant and a local overpressure is established. The lubricant is therefore fed through the lubricant guidance arrangement and brought to locations that require lubrication.

*KRAV3* Preferably, the lubricant guidance arrangement is at least partly integrated in the transmission means housing. This will save space, minimize packing conflicts, and require less work pieces since it may be at least partly embedded in the housing.

*KRAV4* Principally, the covering means covers the covered gap circumferentially and/or laterally. By covering the covered gaps both circumferentially and laterally more lubricant may be trapped between the teeth and the covering means and therefore a higher overpressure may be created when the first tooted gear mesh in with the second toothed gear. However, it may be enough to cover the gaps circumferentially or laterally.

*KRAV5* Preferably, the covering means further extends past the mesh point to cover at least a portion of the second toothed gear circumferentially and/or laterally adjacent the mesh point. The covering means that covers the teeth of the first toothed gear circumferentially and/or laterally may be designed so as to continue from adjacent the mesh point to cover also one part of the second toothed gear circumferentially and/or laterally along the direction of rotation of the second toothed gear. This design will enhance the pump mechanism and also contribute to a more rigid construction of the casing and the lubrication guidance arrangement.

KRA V6 Advantageously, the covering means is integrated in the housing of the transmission means. This is an additionally way to save space and minimize packing conflicts and it is possible to use the geometry of the transmission housing and less additional work pieces are needed.

*KRAV7* Preferably, the covering means comprises at least one separate part. This provides the option that the separate part can be either stationary or rotate along with the first toothed gear and that the covering means may comprise either one part or be assembled by several different parts. In case the covering means is assembled by several different parts they could preferably be spaced from each other.

*KRAV8* In a preferred embodiment of the present invention, it further comprises at least one lubricant outlet passage arranged in the lower part of the transmission means. The purpose of the lubricant outlet passage is to prevent resistance from the pump mechanism during high-speed conditions by allowing the lubricant to pass through the lubricant outlet passage. The lubricant outlet passage is preferably provided inside the transmission means, suitably in the lower part of the transmission means, below the lubricant guidance arrangement. Due to the high velocity of the gear set during high-speed conditions that causes turbulent conditions for the lubricant etc., the lubricant is prone to be evacuated through the lubricant outlet passage instead of being conveyed by the covered gaps of the first toothed gear.

*KRAV9* In one embodiment of the present invention the lubrication system comprises an input shaft that is connected to the first toothed gear, wherein the input shaft drives the first tooted gear. By connecting the input shaft to the toothed gear, which that has covering means, the input shaft will drive the whole lubrication system.. In this manner an integrated pump system is created without the need of an external pump. This saves work pieces, manufacturing time and cost.

*KRAV10* The lubrication system may further comprise an output shaft and wherein the output shaft is provided at a significant vertical distance from the input shaft. This arrangement can be necessitated in a transmission means due to packing restrictions on the transmission means. The input shaft will not only drive the lubrication system but also the transmission means. In this manner an integrated pump system may be created without the need of an external pump. This saves work pieces, manufacturing time and cost.

*KRAV11* According to a second aspect of the invention, use of such a lubrication system in a transmission means in a vehicle is provided.

*KRAV12* According to a third aspect of the invention a method is provided to lubricate with a lubrication system in a transmission means, using a first toothed gear, a second toothed gear that mesh in with the first toothed gear in a mesh point, and covering means that covers at least one of the gaps of the first toothed gear adjacent the mesh point, the covering means being at least partly submerged in the lubricant, wherein at least one of the gaps of the first toothed gear is submerged in lubricant, wherein the toothed gears rotates, and wherein the method comprises the steps of:
- conveying the lubricant by means of the lubricant submerged gaps of the first toothed gear,
- covering at least one of the lubricant submerged gaps with the covering means by means of the rotation of the tooted gears,
- creating a local overpressure at the mesh point by meshing in a lubricant filled gap of the first tooted gear with the second tooted gear,
- lubricating by using the local overpressure.

The present invention is based on the understanding that by using a gear set integrated lubrication system in a transmission, lubrication of the parts that require lubricant within the transmission could be achieved with improved lifetime as a result. Since the present invention describes a lubrication system that uses already existing parts of an ordinary transmission means, no significant oncost adds for the product. The work pieces of the present invention that are new are easily adapted to and included in an ordinary transmission means.
*KRAV13* Preferably, the method further comprises the step of:
- using the local overpressure to feed the lubricant into a lubricant guidance arrangement provided adjacent the mesh point.

The lubricant guidance arrangement may be used to guide the lubricant to a predetermined area where it is needed, for instance at the upper bearings in the transmission means.

Generally, all terms used are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

Other objectives, features and advantages of the present invention will appear from the following detailed disclosure, from the attached dependent claims as well as from the drawings.

### Brief Description of the Drawings

A preferred embodiment of the present invention will in the following be described in more detail with reference to the accompanying exemplary drawings, in which:
Figure 1 is a schematic view, in perspective, of a vehicle with an all wheel drive system;
Figure 2 is a perspective view of the lower part of a power take-off unit, with one side open;
Figure 3 is a side view of the lower part of a power take-off unit.

### Detailed Description of Preferred Embodiments

The above, as well as additional objects, features and advantages of the present invention, will be better understood through the following illustrative and non-limiting detailed description of preferred embodiments of the present invention, with reference to the appended drawings, where the same reference numerals will be used for similar elements.

In the following exemplification embodiments of the present invention, a power take-off unit is described. The skilled person realises that the power take-off unit just as well could be any transmission means having at least two toothed gears.

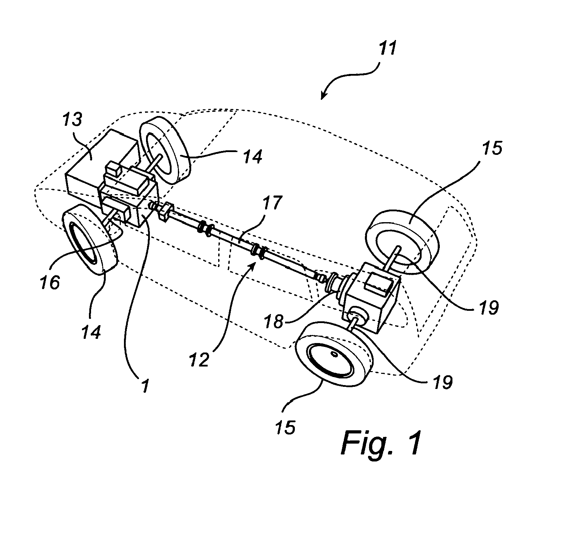

In Figure 1 a schematic vehicle 11 is shown. The vehicle 11 is equipped with an all wheel drive system 12, an engine 13, front wheels 14 and rear wheels 15. The all wheel drive system comprises a power take-off unit 1 at its front portion, half-shafts 16 extending to the front wheels 14, respectively, and a driveshaftpropshaft 17 extending substantially in the longitudinal direction of the vehicle from the power take-off unit 1 to a rear drive module 18. The rear drive module 18 is attached to the rear wheels 15 by half-shafts 19, respectively, via a torque transfer device and a differential (not shown).

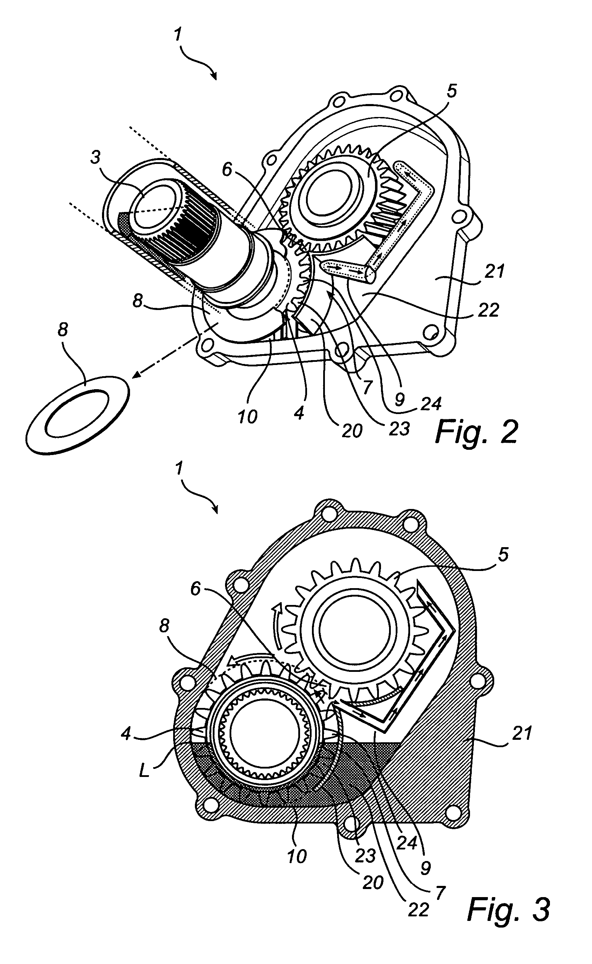

In Figure 2 an embodiment of the present invention in a power take-off unit 1 is shown. One part of the power take-off unit 1 side housing 21 is removed to display some of its internal parts. The power take-off unit 1 has an output shaft (not shown) located significantly higher than an input shaft 3 and the input shaft 3 drives the output shaft via gears. The input shaft 3 is connected to a first toothed gear 4 for impelling rotation of the first toothed gear 4. Further, the first toothed gear 4 is meshing in with a second toothed gear 5 at a mesh point 6. The output shaft, which is do not shown, is here connected to the second toothed gear 5 and protrudes in the opposite direction of the input shaft. However, the output shaft is not limited to this, it may be connected to the second toothed gear via other parts for example other gears. Lubricant is gathered in the lubricant reservoir 22 in the lower part of the power take-off unit 1.

During low speed conditions the main volume of the lubricant will be in the lubricant reservoir 22 in the lower part of the power take-off unit 1. Therefore, at least some of the gaps 23 between the gear teeth 24 of the first toothed gear 4, located at the lower part of the power take-off unit 1, are submerged in the lubricant and hence these gaps 23 are filled with lubricant. A covering means 7 is arranged at the first toothed gear 4 in order to encapsulate at least one of the gaps 23 between the teeth of the first toothed gear 4. When the first toothed gear 1 rotates the lubricant is conveyed by the gear teeth 24 and by means of the covering means 7 at the covered gaps of the first toothed gear 4.

In the embodiment shown in figure 2 the covering means 7 comprises three parts. Firstly, a lateral disc 8 covers one side of the first toothed gear 4. Secondly, the power take-off unit housing 21 covers the other side of the first toothed gear 4. Third, a casing 20, shaped like two bows, covers one portion of the first toothed gear 4 and one portion of the second toothed gear 5 circumferentially. The casing 20 extends downwards from adjacent the mesh point 6 and down to the level where at least one tooth of the first toothed gear 4 is submerged in lubricant, below the lubricant level L (see figure 3), and upwards from adjacent the mesh point 6 and up along a portion of the second toothed gear 5. Adjacent the mesh point 6, a lubrication guidance arrangement 9 opens up in the casing 20. There may be a distance between the parts in order to ensure sufficient lubrication between the teeth. The covering means is not limited to be three parts. It may be only one part or as many parts as needed. There may be a distance between the parts for instance to avoid friction between moving parts.

Figure 3 shows a side view of the embodiment in figure 2. The first toothed gear 4 and the second toothed gear 5 mesh in with each other in a mesh point 6. The mesh point 6 is preferably arranged above the lubricant level L. The preferred directions of rotation for the tooted gears are indicated with arrows.

Figure 2 and 3 further shows a lubrication guidance arrangement 9, which is arranged near the mesh point 6. The location of the lubrication guidance arrangement 9 enables the lubricant, which is conveyed by the covered gaps of the first toothed gear 4 from below the lubricant level L, to be fed into the lubrication guidance arrangement 9. This is indicated with arrows in figure 2 and 3. When the gear teeth of the first and second toothed gears mesh in, no space will be left for the lubricant and a local overpressure is established. The lubricant is therefore fed through the lubricant guidance arrangement 9 and brought to locations that require lubrication and in the end, by means of gravity, flowing back to the lubricant reservoir 22 in the lower part of the power take-off unit 1. In the embodiment shown in figure 2 and 3 the lubricant is fed through the lubricant guidance arrangement 9 to the second toothed gear 5.

In addition,figure 2 and 3 shows a lubricant outlet passage 10 is provided in the lower part of the power take-off unit 1. The purpose of the lubricant outlet passage 10 is that to avoid resistance from the pump mechanism during high-speed conditions, the lubricant is allowed to pass through the lubricant outlet passage 10 at high-speed conditions. The lubricant outlet passage 10 can be an opening between the casing 20 and the lower part of the housing, The lubricant outlet passage 10 isand is preferably located in the lower part of the power take-off unit 1, below the lubricant guidance arrangement 9. Due to the high velocity of the gear set during high-speed conditions the lubricant is prone to be evacuated through the lubricant outlet passage 10 instead of being conveyed by the gaps 23 of the first toothed gear 4.

Even though the preferred embodiment of the covering means 7 described above will enhance the lubrication of the power take-off unit 1 the skilled person realises that there are a variety of alternative covering means 7 designs. For instance the covering means 7 can cover a portion of the first toothed gear 1 only, which will enhance the lubrication by conveying more lubricant from the lubricant level L by the first toothed gear 4. Another possibility is to have the covering means 7 covering a larger area of the second toothed gear 5 and/or the first toothed gear 4. This will mainly have effect upon gear sets that operates at a somewhat constant low speed.

The lubricant is necessary not only for lubrication of the power take-off unit 1 but also for cooling purposes, that is, the lubrication transports heat away. In the technical field of the invention the intended lubricant is lubricating oil, but any lubricant could be used.

Naturally, due to gravity, transmission means with significant vertical distances between their input shafts and their output shafts are more prone to have difficulties with lubrication of higher located bearings and gear sets. In addition, the skilled person realises that it is within the scoop of the invention to transport the lubricant to other parts of a transmission than to relatively high located bearings. For instance bearings that are on the same level as the input shaft but that are shield could be lubricated with the lubrication concept of the present invention.

The invention has mainly been described above with reference to a few embodiments. However, as is readily appreciated by a person skilled in the art, other embodiments than the ones disclosed above are equally possible within the scope of the invention, as defined by the appended patent claims.

### Reference numbers

- 1: power take-off unit
- 3: input shaft
- 4: first toothed gear
- 5: second toothed gear
- 6: mesh point
- 7: covering means
- 8: lateral disc
- 9: lubrication guidance arrangement
- 10: lubricant outlet passage
- 11: vehicle
- 12: all wheel drive system
- 13: engine
- 14: front wheels
- 15: rear wheels
- 16: half-shafts
- 17: driveshaft
- 18: rear drive module
- 19: half-shafts
- 20: casing
- 21: housing
- 22: lubricant reservoir
- 23: gap
- 24: gear tooth
- L: lubricant level

## Claims

1. Lubrication system in a transmission means, said lubrication system comprising a first toothed gear (4) wherein at least one of the gaps of said first tooted gear (4) is submerged in lubricant, and a second toothed gear (5) that mesh in with said first toothed gear (4) in a mesh point (6), **characterized in that** said lubrication system further comprises covering means (7, 8) that covers at least one of the gaps of said first toothed gear (4) adjacent said mesh point (6) and wherein said covering means (7, 8) is at least partly submerged in said lubricant so that said lubricant is conveyed to said mesh point (6) by said covered gaps.

2. Lubrication system according to claim 1, further comprising at least one lubricant guidance arrangement (9) provided adjacent said mesh point (6).

3. Lubrication system according to claim 2, wherein said lubricant guidance arrangement (9) is at least partly integrated in a housing of said transmission means.

4. Lubrication system according to anyone of the preceding claims, wherein said covering means (7) covers said covered gap circumferentially and/or laterally.

5. Lubrication system according to anyone of the preceding claims, wherein said covering means (7) further extends past said mesh point (6) to cover at least one of the gaps between the teeth of said second toothed gear (5) circumferentially and/or laterally, adjacent said mesh point (6).

6. Lubrication system according to anyone of the preceding claims, wherein said covering means (7) is integrated in a thehousing of said transmission means.

7. Lubrication system according to anyone of the preceding claims, wherein said covering means (7) comprises at least one separate part (8).

8. Lubrication system according to anyone of the preceding claims, further comprising at least one lubricant outlet passage (10) arranged in the lower part of said transmission means.

9. Lubrication system according to anyone of the preceding claims, comprising an input shaft (3) that is connected to said first toothed gear (4), wherein said input shaft drives said first tooted gear (4).

10. Lubrication system according to claim 9, further comprising an output shaft (2) wherein said output shaft (2) is provided at a significant vertical distance from said input shaft (3).

11. Use of a lubrication system according to anyone of the preceding claims in a vehicle (11).

12. Method to lubricate with a lubrication system in a transmission means, using a first toothed gear (4), a second toothed gear (5) that mesh in with said first toothed gear (4) in a mesh point (6), and covering means (7, 8) that covers at least one of the gaps of said first toothed gear adjacent said mesh point (6), said covering means (7, 8) being at least partly submerged in said lubricant, wherein at least one of the gaps of said first toothed gear (4) is submerged in lubricant, wherein said toothed gears (4, 5) rotates, and wherein said method comprises the steps of:
- conveying said lubricant by means of said lubricant submerged gaps of said first toothed gear,
- covering at least one of said lubricant submerged gaps with said covering means (7, 8) by means of the rotation of said tooted gears,
- creating a local overpressure at said mesh point (6) by meshing in a lubricant filled gap of said first tooted gear (4) with said second tooted gear (5),
- lubricating by using said local overpressure.

13. Method to lubricate with a lubrication system in a transmission means according to claim 12, wherein said method further comprises the step of:
- using said local overpressure to feed said lubricant into a lubricant guidance arrangement (9) provided adjacent said mesh point (6).
